# EUROPEAN PATENT SPECIFICATION

(11) **EP 2 981 854 B1**
(45) Date of publication and mention of the grant of the patent: **10.10.2018**
(21) Application number: 14778742.8
(22) Date of filing: 04.04.2014
(51) Int. Cl.: G01W 1/10, G01W 1/14, G01C 21/34, G01C 21/36

(54) **METHOD AND SYSTEM FOR NOWCASTING PRECIPITATION BASED ON PROBABILITY DISTRIBUTIONS**
VERFAHREN UND SYSTEM ZUR NOWCASTING VON NIEDERSCHLAG AUF DER BASIS VON WAHRSCHEINLICHKEITSVERTEILUNGEN
PROCÉDÉ ET SYSTÈME POUR PRÉCIPITATION DE NOWCASTING SUR LA BASE DE DISTRIBUTIONS DE PROBABILITÉS

(30) Priority: 04.04.2013 US 201313856923; 16.06.2013 US 201361835626 P; 19.06.2013 US 61836713; 20.06.2013 US 201313922800; 26.06.2013 US 201361839675 P; 22.07.2013 US 201313947331
(43) Date of publication of application: 10.02.2016
(60) Divisional application: 18187446.2
(73) Proprietor: Sky Motion Research, ULC., Montréal, Québec H3A 1P8 (CA)
(72) Inventor: LEBLANC, Andre, Mont-Royal, Québec H3R 1Z6 (CA)
(74) Representative: Barnfather, Karl Jon
(86) International application number: PCT/CA2014/000314
(87) International publication number: WO 2014/161077

(56) References cited:
- US-A1- 2011 029 243
- US-B1- 7 231 300
- US-B1- 7 231 300
- US-B1- 7 321 827
- US-B1- 7 321 827

## Description

### BACKGROUND

### (a) Field

The subject matter disclosed generally relates to a system for determining weather forecasts.

### (b) Related Prior Art

Weather forecasting of storms and other meteorological events is extremely important to aviation, space agencies, emergency response agencies, traffic, public safety etc.

Conventional weather forecasting systems provide weather predictions twelve hours to a few days from the present time by applying mathematical/physical equations using various two-dimensional or three-dimensional physical parameters.

Many systems use meteorological radars. The meteorological radar emits pulses to a precipitation region in the sky so as to observe the strength of rainfall or snowfall according to reflective (or echo) intensities of the pulses. The intensities are then converted into gray levels. An image of the precipitation region is represented as a combination pattern of various shapes and gray-levels. Two consecutive images are subjected to pattern matching using a cross correlation (CC) method so as to evaluate moving vector(s), and by using a one-dimensional extrapolation method, a precipitation pattern (of the same shape and size) is translated.

Such technique tracks clusters or cells to predict storm motion by correlating cells in two or more successive images to determine speed and direction of a storm front. This movement information is then used to project where the precipitation areas are likely to be located in the next thirty to sixty minutes which is represented in the form of forecasted radar reflectivity images.

However, these systems have too many limitations which affect the accuracy of the predictions.

For example, it is possible that a given radar reflectivity information may provide inaccurate forecasts. Furthermore, where more than one radar site is tracking a storm front, it is possible that each of the radar sites may provide different and conflicting forecasts. In this case, the result output to the user may very well be the inaccurate ones.

Furthermore, these systems do not take into consideration the degree of change in the state of the precipitation region e.g. from rain to snow. In brief, unstable changes regarding size, shape, gray-level, and the like, which represent the natural phenomena, cannot be sufficiently predicted, and topographical influences on the precipitation region are also not considered.

Moreover, none of the existing systems provide a probability distribution indicating the possible types of precipitation at the possible rates and over a specified period.

For these and other reasons, there remains a need for a system and method which implement an improved nowcasting technique.
Further background information can be found in US 7321827, which discloses a system and method for forecasting probability of precipitation values and most probable precipitation amount values over certain time periods.

### SUMMARY

In an embodiment, there is described a system/method for generating variable length and variable level-of-detail textual descriptions of precipitation types, precipitation intensities and probability or level of confidence. A precipitation
nowcasting system produces a forecast of precipitation type and precipitation rate (Forecasted Values). Forecasted Values are forecasted in equal or variable time intervals, each interval having a start time and an end time (ex: time-series of 1, 5, 10, 15, 30 minute increments).

In an embodiment, weather observations and predictions are received from a plurality of weather data sources and processed to determine a probability distribution of the type of precipitation (PType) and a probability distribution of the rate of precipitation (PRate) over a period. These two probability distributions may then be combined into a plurality of single probability distributions (PTypeRate) each indicating the probability of occurrence of a certain type of precipitation at a certain rate over a period. Examples of a PTypeRate forecasts could be the combination of Rain and Light Intensity (Light Rain) along with the probability associated with such combination e.g. 40% chance of light rain. Other combinations may include Rain and Heavy Intensity (Heavy Rain), Snow and Light Intensity (Light Snow), etc.

The probability of precipitation occurring is equal to the sum of all PTypeRate categories with precipitation. The probability of precipitation not occurring is equal to the sum of all PTypeRate categories describing no precipitation.

For each time interval, the probability distribution may be displayed in textual and/or numerical forms comprising a textual/numerical description of the PTypeRate Category, along with its probability percentage. The probability distribution can also be displayed graphically with time on one axis and PTypeRate categories on the other.

According to an aspect, there is provided a computer implemented method for generating weather forecast for a given period and a given territory, the method comprising: receiving weather values for the given territory from one or more weather sources; using the weather values, generating a probability distribution of precipitation type forecast (PType forecast) for the given period, the PType forecast comprising a number m of precipitation types and a probability associated with each type; using the weather values, generating a probability distribution of precipitation rate forecast (PRate forecast) for the given period, the PRate forecast comprising a number n of precipitation rates and a probability associated with each rate; combining the PType forecast for the given period and the PRate forecast for the given period to produce a number m*n of precipitation type-rate forecasts (PTypeRate forecasts), each PTypeRate forecast representing the probability of having a given type of precipitation at a given rate; and outputting one or more of the PTypeRate forecasts for display.

In an embodiment, the method may further include, for each PTypeRate forecast, multiplying a first probability P1 associated with a given type of precipitation from the PType forecast by a second probability P2 associated with a given rate of precipitation from the PRate forecast to obtain a value P3 representing the probability of receiving the given type of precipitation at the given rate.

In an embodiment, the method further comprises receiving the weather values from a plurality of different weather sources.

In an embodiment, the method further comprises generating an individual PType forecast from the weather values received from each weather source, thus generating a plurality of individual PType forecasts, and using a probability aggregator, combining the plurality of individual PType forecasts into a final PType forecast.

In another embodiment, the method further comprises generating an individual PRate forecast from the weather values received from each weather source, thus generating a plurality of individual PRate forecasts, and using a probability aggregator, combining the plurality of individual PRate forecasts into a final PRate forecast.

In a further embodiment, aggregating comprises performing weighted averaging, wherein a weight is assigned to each individual PRate forecast and/or PType forecast depending on the weather source associated with the PType forecast or PRate forecast.

In an embodiment, the method further comprises determining a probability that precipitation will not occur by summing the probabilities for all categories of PTypeRates that represent no precipitation.

In an embodiment, the method further comprises determining a probability that precipitation will occur by summing the probabilities for all categories of PTypeRates that represent precipitation.

In an embodiment, the method further comprises associating a textual description to one or a combination of PTypeRates; and outputting the textual description for display on a user device.

In an embodiment, the method further comprises combining two or more PTypeRate forecasts along a dimension, the dimension being one of: probability, rate of precipitation, and type of precipitation; and associating a textual description to each combination of PTypeRate forecasts.

In an embodiment, the method further comprises receiving a user input indicating the location of the given territory.

In an embodiment, the method further comprises receiving a user input indicating the given period.

In an embodiment, the given period comprises multiple time intervals, wherein the multiple time intervals have a fixed value.

In an embodiment, the fixed value is either one of 1 minute, 2 minutes, 5 minutes, 10 minutes, 15 minutes, 30 minutes and 60 minutes.

In an embodiment, the given period comprises multiple time intervals, wherein the multiple time intervals have variable values.

In an embodiment, wherein receiving weather values comprises receiving at least a temperature profile for the given territory and generating the PType forecasts based on at least the temperature profile.

In an embodiment, the method further comprises outputting different combinations of PTypeRate forecasts for display.

In another aspect, there is provided a computer implemented method for generating weather forecast for a given period and a given territory, the method comprising: receiving weather values for the given territory from one or more weather sources; using the weather values, generating a probability distribution of precipitation type forecast (PType forecast) for the given period, the PType forecast comprising a number m of precipitation types and a probability associated with each type; using the weather values, generating a probability distribution of precipitation rate forecast (PRate forecast) for the given period, the PRate forecast comprising a number n of precipitation rates and a probability associated with each rate; combining the PType forecast for the given period and the PRate forecast for the given period to produce a number z of precipitation type-rate forecasts (PTypeRate forecasts), the number z being equal to or less than m*n, wherein each PTypeRate forecast represents the probability of having a given type of precipitation at a given rate; and outputting the PTypeRate forecasts for display.

In a further aspect, there is provided a device for generating a weather forecast for a given period and a given territory, the device comprising an input for receiving weather values for the given territory from one or more weather sources; a precipitation type (PType) distribution forecaster for generating, using the weather values, a probability distribution of precipitation type forecast (PType forecast) for the given period, wherein the PType forecast comprising a number m of precipitation types and a probability associated with each type; a precipitation rate (PRate) distribution forecaster for generating, using the weather values, a probability distribution of precipitation rate forecast (PRate forecast) for the given period, the PRate forecast comprising a number n of precipitation rates and a probability associated with each rate; a precipitation type and rate (PTypeRate) distribution forecast combiner for combining the PType forecast for the given period and the PRate forecast for the given period to produce a number m*n of precipitation type-rate forecasts (PTypeRate forecasts), each PTypeRate forecast representing the probability of having a given type of precipitation at a given rate; and an output for outputting one or more of the PTypeRate forecasts for display.

### Definitions

In the present specification, the following terms are meant to be defined as indicated below:

Nowcasting: The term *nowcasting* is a contraction of "now" and "forecasting"; it refers to the sets of techniques devised to make short term forecasts, typically in the 0 to 12 hour range.

Precipitation type (PType): indicates the type of precipitation. Examples of precipitation types include, but are not limited to, rain, snow, hail, freezing rain, ice pellets, ice crystals.

Precipitation rate (PRate): indicates the precipitation intensity. Examples of precipitation rate values include, but are not limited to, no (i.e., none), light, moderate, heavy, extreme. In an embodiment, the precipitation rate can also be expressed as a range of values such as: none to light, light to moderate, moderate to heavy, or any combination of the above.

Precipitation probability: indicates the probability that precipitation might occur. Examples of precipitation probability values include, but are not limited to, no, unlikely, slight chance of, chance of, likely, very likely, certain,.

In an embodiment, the precipitation probability can also be expressed as a range of values such as: none to light, light to moderate, moderate to heavy,. Precipitation probability may also be expressed in terms of percentages; e.g., 0%, 25%, 50%, 75%, 100%; or ranges of percentages; e.g., 0% to 25%, 25% to 50%, 50% to 75%, 75% to 100%. In an embodiment, the precipitation probability may be taken from the probability distribution as discussed below.

Precipitation type and precipitation rate categories (PTypeRate): a PTypeRate category is combination of precipitation type and precipitation rate to which may be associated a probability of occurrence for a given period to indicate the possibility of receiving a certain type of precipitation at a certain rate.

Temperature profile: a list of temperature values indicating the temperature at different latitudes e.g. ground surface, 100 feet above ground, 200 feet above ground etc.

Throughout the specification and claims, the following terms take the meanings explicitly associated herein, unless the context clearly dictates otherwise. The phrase "in one embodiment" as used herein does not necessarily refer to the same embodiment, though it may. Furthermore, the phrase "in another embodiment" as used herein does not necessarily refer to a different embodiment, although it may. Thus, as described below, various embodiments of the invention may be readily combined, without departing from the scope or spirit of the invention. The term "comprising" and "including" should be interpreted to mean: including but not limited to.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise.

Features and advantages of the subject matter hereof will become more apparent in light of the following detailed description of selected embodiments, as illustrated in the accompanying figures. As will be realized, the subject matter disclosed and claimed is capable of modifications in various respects, all without departing from the scope of the claims. Accordingly, the drawings and the description are to be regarded as illustrative in nature, and not as restrictive and the full scope of the subject matter is set forth in the claims.

### BRIEF DESCRIPTION OF THE DRAWINGS

Further features and advantages of the present disclosure will become apparent from the following detailed description, taken in combination with the appended drawings, in which:
Figure 1 is a block diagram of a system for generating PTypeRate nowcasts in accordance with an embodiment;
Figure 2 is table containing examples of PType values, PRate values and combined PTypeRate values, in accordance with an embodiment;
Figure 3 is a block diagram of an exemplary PType Forecaster in accordance with an embodiment;
Figure 4 is a block diagram of an exemplary PRate forecaster, in accordance with an embodiment;
Figure 5 is an example of a network environment in which the embodiments may be practiced;
Figure 6 is a flowchart of a method for generating weather forecast for a given period and a given territory, in accordance with an embodiment;
Figure 7 is a flowchart of a method for generating weather forecast for a given period and a given territory, in accordance with another embodiment; and
Figure 8 illustrates an exemplary diagram of a suitable computing operating environment in which embodiments of the invention may be practiced.

It will be noted that throughout the appended drawings, like features are identified by like reference numerals.

### DETAILED DESCRIPTION

The embodiments will now be described more fully hereinafter with reference to the accompanying drawings, which form a part hereof, and which show, by way of illustration, specific embodiments by which the embodiments may be practiced. The embodiments are also described so that the disclosure conveys the scope of the The embodiments are also described so that the disclosure conveys the scope of the invention to those skilled in the art. The embodiments may, however, be embodied in many different forms and should not be construed as limited to the embodiments set forth herein.

Among other things, the present embodiments may be embodied as methods or devices. Accordingly, the embodiments may take the form of an entirely hardware embodiment, an entirely software embodiment, an embodiment combining software and hardware aspects, etc. Furthermore, although the embodiments are described with reference to a portable or handheld device, they may also be implemented on desktops, laptop computers, tablet devices or any computing device having sufficient computing resources to implement the embodiments.

Briefly stated the invention relates to a system for producing highly localized (1x1km and less), very short term (0 - 6 hours), and timely (updated frequently e.g. every 5 minutes) forecasts of precipitation type and intensity (called nowcasts). The system ingests high-resolution precipitation observations from weather radars, surface observations, and weather forecasts to then automatically track the location, trajectory, speed and intensity of precipitation structures as they move (advect) over time. These high-resolution precipitation observations, forecasts and tracking information are used to forecast the future by extrapolation (advection).

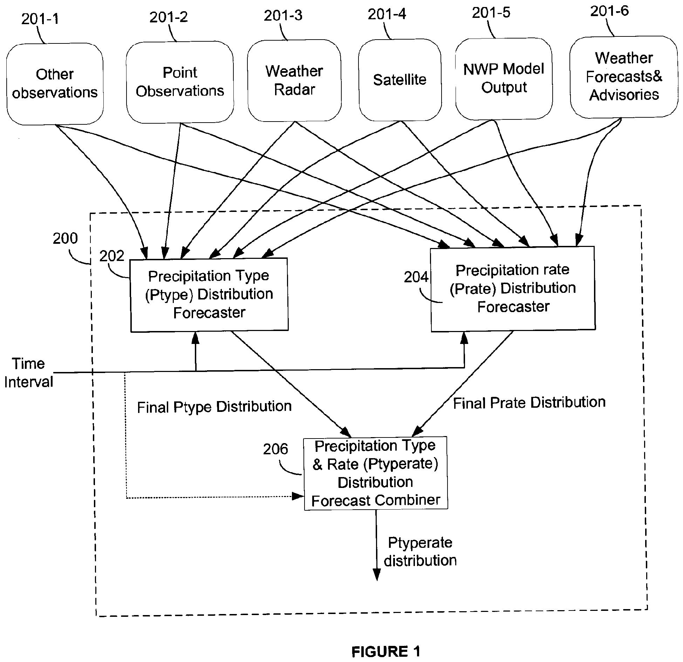

Figure 1 is a block diagram of a system for generating PTypeRate nowcasts in accordance with an embodiment. As shown in Figure 1, the system **200** receives weather observations from different sources **201** such as weather observations sources including but not limited to: point observations **201-2** (e.g. feedback provided by users and automated stations), weather radars **201-3,** satellites **201-4** and other types of weather observations **201-1,** and weather forecast sources such as numerical weather prediction (NWP) model output **201-5** and weather forecasts and advisories **201-6.**

In an embodiment, the system **200** comprises a PType distribution forecaster **202** and a PRate distribution forecaster **204.**

The PType forecaster **202** receives the weather observations from the different sources **201** and outputs a probability distribution of precipitation type over an interval of time, for a given latitude and longitude. In one non-limiting example, it could be:
a. Snow: 10%
b. Rain: 30%
c. Freezing Rain: 60%
d. Hail: 0%
e. Ice Pellets: 0%

Similarly, the PRate forecaster **204** receives the weather observations for a given latitude and longitude from the different sources **201** and outputs a probability distribution forecast of a precipitation rate (PRate) in a representation that expresses the uncertainty. For example, the PRate may be output as a probability distribution of precipitation rates or a range of rates over an interval of time, for a given latitude and longitude. For example:
f. No Precip: 30%
g. Light: 40%
h. Moderate: 20%
i. Heavy: 10%

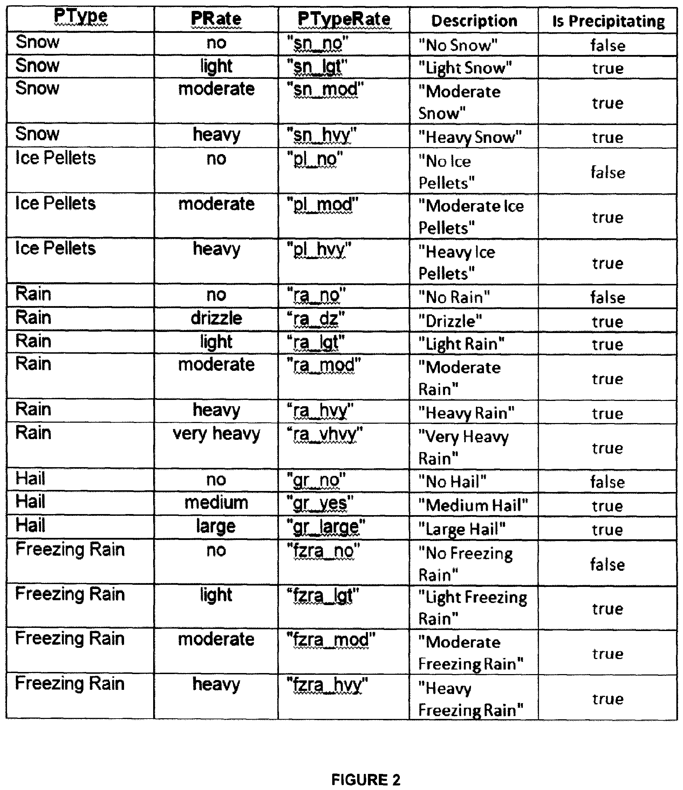

The PRate and PType values output by the PRate forecaster **204** and the PType forecaster **202** are sent to a forecast combiner **206** to combine these values into a single value PTypeRate which represents the precipitation outcomes. For example, if the value of PType is "Snow", and the value of "PRate" is heavy, the combined value of PTypeRate may be "heavy snow". An example of possible PType values, PRate values and combined PTypeRate values is shown in Figure 2.

In an embodiment, the forecast combiner **206** (or PType forecaster **202)** determines the probability that precipitation will not occur by summing the probability for all PTypeRate categories that represent no precipitation. Ex: NoSnow, NoRain, or NoFreezingRain. Conversely, the probability that precipitation will occur may be obtained by summing the probability for all PTypeRate categories that represent precipitation. Ex: a. LightSnow, HeavyRain or ModerateFreezingRain.

### Calculation of PType

As shown in Figure 1, the PType forecaster **202** receives weather observations/values from different sources **201.** Examples of weather values include: surface temperature, precipitation type, temperature profile, wind direction and speed etc. For each weather value obtained from one of the sources **201,** the PType forecaster **202** calculates a forecasted weather value over the time interval such that the forecasted weather value represents the uncertainty within that time interval. For example, if the value for the ground temperature is -23, the forecasted weather value may be in the range of: -22.5 to -23.6.

Factors that affect the uncertainty may include: a.) Lead time and length of the interval, b.) Availability, trust, precision, accuracy, distance from location, conflicting reports and recency of the data, and c.) inherent imprecision and inaccuracies of the forecasting systems.

Returning back to the PType forecaster **202,** calculation of the final PType distribution depends on the availability of weather values from the different sources **201.** Generally, the PType forecaster **202** extracts two types of inputs from the weather values: 1.) a PType distribution based precipitation type weather values (PTypeWV) received from the different sources **201,** and 2.) PType probabilities based on temperature Weather Values (PTypeProbTemp).

The PTypeWV may be obtained by aggregating (or weighted averaging) the PType distributions received from the different sources. For example: If the PType distribution of surface observations are as follows: a. Snow: 90%, b. Rain: 0%, c. Freezing Rain: 80%, d. Hail: 0%, e. Ice Pellets: 50%; while the PType distribution of NWP model are: a. Snow: 10%, b. rain: 0%. c. Freezing Rain: 60%, d. Hail: 0%, e. Ice Pellets: 0%; then the final PType distribution, based on averaging would be: a. Snow: 50%, b. Rain: 0%, c. Freezing Rain: 70%, d. Hail: 0%, e. Ice Pellets: 25%.

PTypeProbTemp may be obtained by assigning each precipitation type the probability that it can occur based on air temperature obtained from Weather Values. As discussed above, the system may forecast the change in temperatures over the period based on such variable as the direction and speed of wind, and the air temperature in surrounding areas, temperature profile etc. For example, if surface air temperature is well below freezing, rain or hail are impossible but snow, freezing rain or ice pellets are possible.

In one non-limiting example, if the temperature = -10C, the PTypeProbTemp may be:
1. Snow: 100%
2. Rain: 0%
3. Freezing Rain: 70%
4. Hail: 0%
5. Ice Pellets: 50%

In the case where only PTypeProbTemp is available (but not PTypeWV), the PType forecaster **202** may generate the final PType distribution by dividing the probabilities such that all the probabilities add to 100%. In one non-limiting example: the final PType distribution may be:
a. Snow: 100% / (100+70+50) = 45%
b. Rain: 0% / (100+70+50) = 0%
c. Freezing Rain: 70% / (100+70+50) = 32%
d. Hail: 0% / (100+70+50) = 0%
e. Ice Pellets: 50% / (100+70+50) = 23%

If only a PTypeWV is available (but not PTypeProbTemp), the PTypeWV may be used as the final PType distribution.

If both PTypeProbTemp and PTypeWV are available, the final PType distribution may be obtained by multiplying them both together.

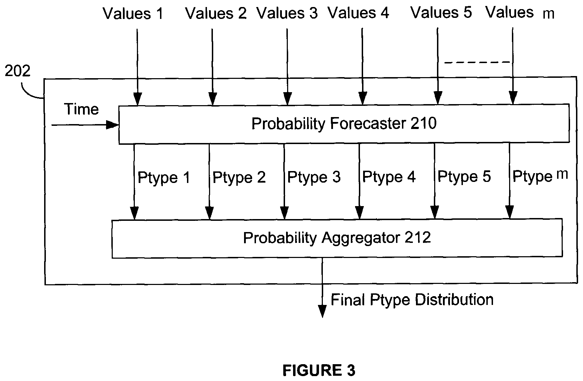

Figure 3 is a block diagram of an exemplary PType Forecaster **202** in accordance with an embodiment. As shown in Figure 3, the PType Forecaster **202** receives sets of weather values from different sources e.g. value 1, value 2...value m, as well as the time interval over which the forecast needs to be performed. For example, the time interval may be set/changed by the user. As shown in Figure 3, a probability forecaster **210** receives the sets of weather values and the time and outputs for each set a probability distribution of a precipitation type (PType) e.g. PType 1 for values 1, PType 2 for values 2 etc.

A probability aggregator **212** receives the different PType i_ₙ distributions output by the probability forecaster **210** and aggregates them into a final PType distribution. In a non-limiting example of implementation, the probability aggregator **212** may average the different PType distributions as exemplified above. However, other embodiments are also possible which allow weighted aggregation, whereby it is possible to reduce the weight for PType distributions associated with less reliable sources, and increase the weight for PType distributions associated with sources that are known to be reliable and accurate.

### Calculation of PRate

Referring back to Figure 1, the PRate forecaster **204** receives weather observations/values from different sources **201** and outputs a probability distribution PRate indicative of the precipitation rate/amount, over an interval of time. The interval of time may be fixed for example: every minute, or variable for example: one minute, then five minutes, then ten minutes etc.

The PRate Distribution represents, for each time interval, possible outcomes of water precipitation amounts (whether the water is frozen in the form of snow, ice pellets etc. or melted and in a liquid form).

A non-limiting example of a PRate may be:
No Precipitation: 20%
Light (0-1 mm): 10%
Moderate (1-20 mm): 10%
Heavy (20-40 mm): 20%
Very Heavy (40+ mm): 40%

In an embodiment, the PRate forecaster **204** may extract precipitation rate values from the weather values received from the sources **201.** For each precipitation available rate value the PRate Forecaster **204** may calculate a forecasted PRate Distribution for a given interval of time by assigning a probability to each precipitation type of precipitation rate. For example, for each type of precipitation rate (no precipitation, light precipitation, moderate precipitation etc.) the PRate forecaster **204** may associate a probability indicating the likelihood that the rate may happen, based on the weather values received from the different sources.

Factors that affect the uncertainty may include (but are not limited to): a.) Lead time and length of the interval, b) Availability, trust, precision, accuracy, distance from location, conflicting reports and recency of the data, and c) the forecasting systems' inherent imprecision and inaccuracies.

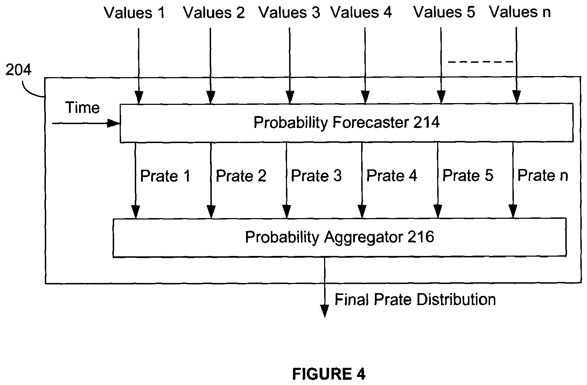

Figure 4 is a block diagram of an exemplary PRate forecaster **204,** in accordance with an embodiment. As shown in Figure 4, the PRate forecaster **204** comprises a probability forecaster **214** which is adapted to receive the sets of weather values from the different sources e.g. value 1, value 2... value n, as well as the time interval over which the forecast needs to be performed, and outputs for each set a probability distribution of a precipitation rate (PRate) e.g. PRate 1 for values 1, PRate 2 for values 2 etc.

A probability aggregator **216** receives the different PRate₁₋ₙ distributions output by the probability forecaster **214** and aggregates them into a final PRate distribution. In a non-limiting example of implementation, the probability aggregator **216** may average the different PRate distributions as exemplified above. However, other embodiments are also possible which allow weighted aggregation, whereby it is possible to reduce the weight for PRate distributions associated with less reliable sources, and increase the weight for PRate distributions associated with sources that are known to be reliable and accurate.

### Calculation of PTypeRate

For a given latitude and longitude, the system outputs forecasted PTypeRate Distributions for predefined time intervals, either fixed (ex: 1 minute) or variable (ex: 1 minute, then 5 minutes, then 10 minutes, etc). The system can either pre-calculate and store forecasted PTypeRate Distributions in a sequence of time intervals, or calculate it on the fly. A PTypeRate Distribution represents, for each time interval, the certainty or uncertainty that a PTypeRate will occur.

With reference to Figure 1, the forecast combiner **206** receives the final PType distribution from the PType forecaster **202** and the final PRate distribution from the PRate forecaster **204** to combine them into a group of PTypeRate distribution values each representing the probability of receiving a certain type of precipitation at a certain rate. An example is provided below.

Assuming that the PType distribution is as follows: Snow: 50%, Rain 0%, Freezing rain: 30%, Hail 0%, Ice pellets 20%, and the PRate distribution is as follows: None: 0%, light: 10%, moderate:20%, Heavy: 30%, Very heavy 40%, the PTypeRate distributions may be as follows:

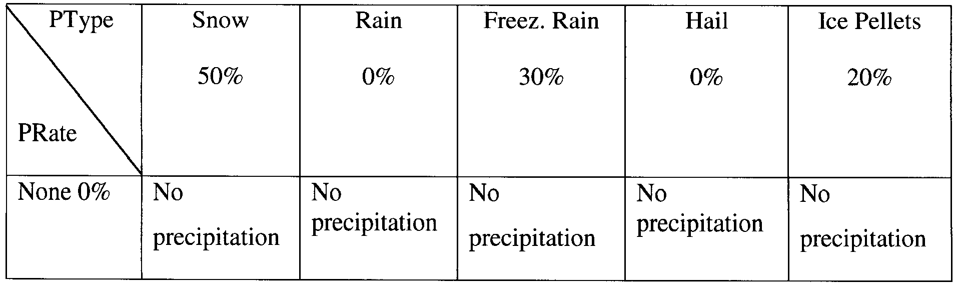

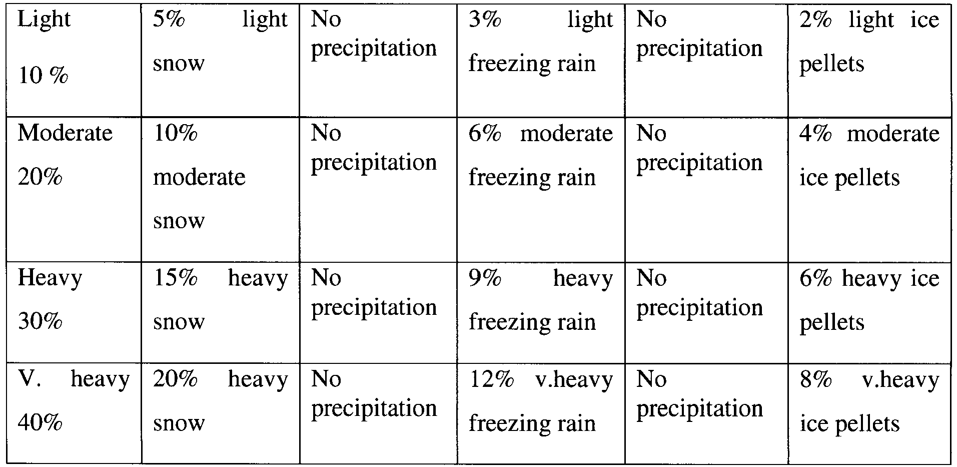

Accordingly, the forecast combiner **206** multiplies the probability of each type of precipitation by the probability of each rate of precipitation to obtain a probability of receiving a certain type of precipitation at a certain rate for example, 20% chance of heavy snow, or 12% chance of very heavy freezing rain. In an embodiment, it is possible to associate probability ranges with textual information for displaying the textual information to the user instead of the probabilities in numbers. For example, probabilities that are between 5% and 15% may be associated with the text: "low chance", while probabilities that are between 40% and 70% may be associated with the text "high chance", or "very likely" etc. whereby, instead of displaying: 60% chance of heavy snow, it is possible to display: "high chance of heavy snow".

In another embodiment, it is possible to combine two or more different PTypeRates along one or more dimensions (the dimensions including: the rate, type, or probability). For example, results of such combination may include: Likely light to moderate rain, Likely light to moderate rain or heavy snow; Likely moderate rain or snow; likely rain or snow; chance of light to moderate rain or heavy snow or light hail; chance of moderate rain, snow or hail; chance of rain, snow or hail, etc.

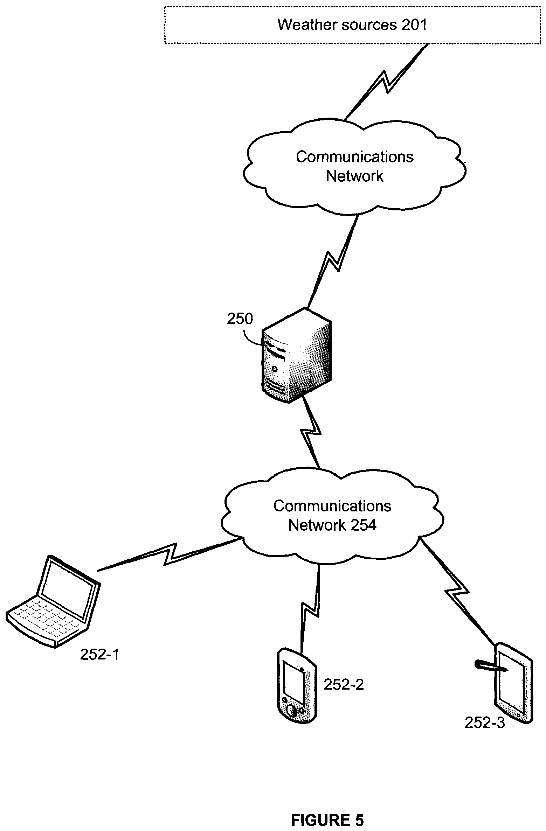

Figure 5 is an example of a network environment in which the embodiments may be practiced. The system **200** (aka "nowcaster") may be implemented on a server/computer **250** which is accessible by a plurality of client computers **252** over a telecommunications network **254.** The client computers may include but not limited to: laptops, desktops, portable computing devices, tablets and the like. Using a client computer **252,** each user may specify the time interval for which they want to receive the nowcasts and the location for which the nowcasts are needed. For example, the user may enter the zip/postal code, or address, or location on a map, or the latitude and longitude of the location for which the nowcasts are needed, along with the time interval over which the nowcasts are needed. The time interval may extend between one minute and several hours.

Upon receiving the location information and time information, the server 250 may receive the available weather values for the specified location, and output the different PTypeRates discussed above which represent the nowcasts for the specific location over the specified period. Accuracy of the nowcasts may also depend on the number of weather sources available for a certain area. For example, an area that is highly populated may include more weather radars and more media attention (and thus more satellite coverage or forecasts) than a remote area in a forest.

The PTypeRates produced by the server **250** may then be sent to the client computer 252 for display to the user. In an embodiment, it is possible to display the PTypeRates in series one after the other, or display those having a higher percentage.

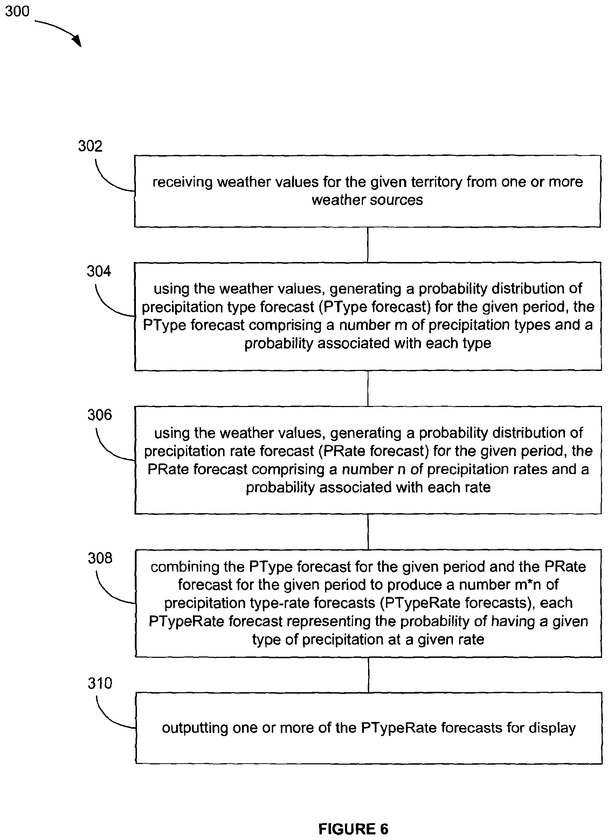

Figure 6 is a flowchart of a computer implemented method 300 for generating weather forecast for a given period and a given territory, in accordance with an embodiment. The method comprising receiving weather values for the given territory from one or more weather sources at step 302. Step 304 comprises using the weather values, generating a probability distribution of precipitation type forecast (PType forecast) for the given period, the PType forecast comprising a number m of precipitation types and a probability associated with each type. Step 306 comprises, using the weather values, generating a probability distribution of precipitation rate forecast (PRate forecast) for the given period, the PRate forecast comprising a number n of precipitation rates and a probability associated with each rate. Step 308 comprises combining the PType forecast for the given period and the PRate forecast for the given period to produce a number m*n of precipitation type-rate forecasts (PTypeRate forecasts), each PTypeRate forecast representing the probability of having a given type of precipitation at a given rate. Step 310 comprises outputting one or more of the PTypeRate forecasts for display, method for method 300 for generating weather forecast for a given period and a given territory, in accordance with another embodiment.

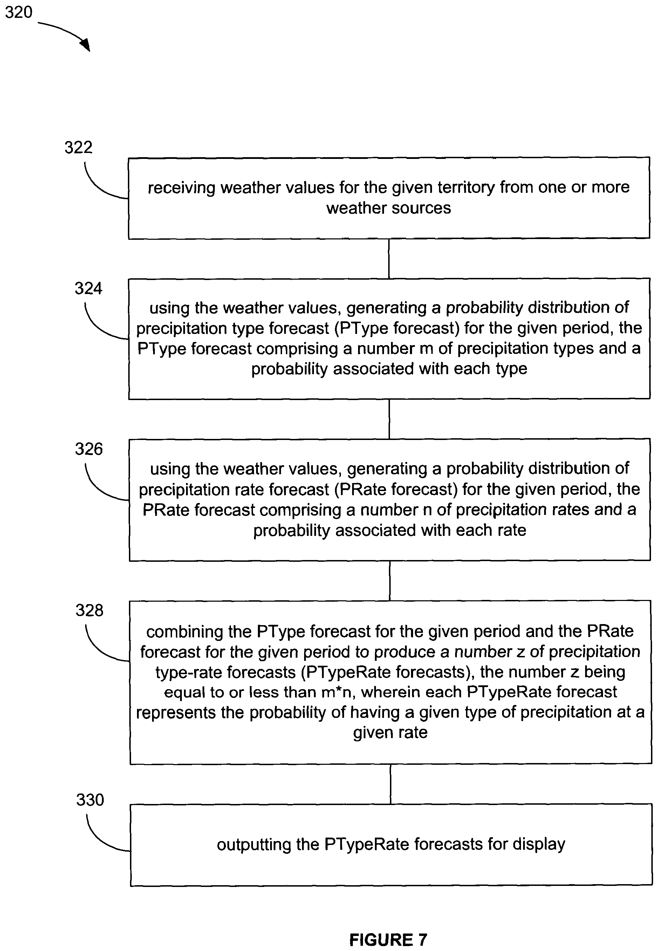

Figure 7 is a flowchart of a computer implemented method 320 for generating weather forecast for a given period and a given territory, in accordance with another embodiment. Step 322 comprises receiving weather values for the given territory from one or more weather sources. Step 324 comprises, using the weather values, generating a probability distribution of precipitation type forecast (PType forecast) for the given period, the PType forecast comprising a number m of precipitation types and a probability associated with each type. Step 326 comprises, using the weather values, generating a probability distribution of precipitation rate forecast (PRate forecast) for the given period, the PRate forecast comprising a number n of precipitation rates and a probability associated with each rate. Step 328 comprises combining the PType forecast for the given period and the PRate forecast for the given period to produce a number z of precipitation type-rate forecasts (PTypeRate forecasts), the number z being equal to or less than m*n, wherein each PTypeRate forecast represents the probability of having a given type of precipitation at a given rate. Step 330 comprises outputting the PTypeRate forecasts for display.

There may be another embodiment of the nowcaster **200.** In this embodiment, the nowcaster comprises a PType selector/receiver and a PRate distribution forecaster. Similar to the embodiment shown in Figure 1, the PRate distribution forecaster receives the weather observations for a given latitude and longitude from the different sources and outputs a probability distribution forecast of a precipitation rate (PRate) in a representation that expresses the uncertainty. For example, the PRate may be output as a probability distribution of precipitation rates or a range of rates over an interval of time, for a given latitude and longitude. In one non-limiting example:
f. No Precip.: 30%
g. Light: 40%
h. Moderate: 20%
i. Heavy: 10%

However, the PType selector/receiver does not output a probability distribution associated with different types of precipitation. Instead, the PType selector/receiver receives weather observations for a given latitude and longitude from the different sources to select one precipitation type from a list of different precipitation types. In one non-limiting example, based on the inputs received from the sources, the PType selector/receiver selects a single precipitation type that is most likely to occur in the given latitude and longitude (and/or location) from the following list of precipitation types:
a. Snow
b. Rain
c. Freezing Rain
d. Hail
e. Ice Pellets
f. Mix (*e.g.,* a+c, a+d, b+c, a+e, c+e, d+e, etc.)

From the list of precipitation types such as the one above, only one precipitation type is selected for a given location. For example, a mix of snow and freezing rain can be selected as the most likely precipitation type for a given location at a given time. The precipitation type is not associated with a probability value. In fact, since only one precipitation type is selected for any given location and time corresponding to the location, the selected precipitation type will have the effective probability value of 100%.

The list of precipitation types that are available for selection of one type may include a mix type that represents a mix of two different precipitation types (e.g., snow and freezing rain, hail and ice pellets, etc.). A mix type is considered as a distinct precipitation type available for selection and, as shown above in (f) of the list, there can be many different mix types representing the mix of different pairs of various precipitation types.

In another embodiment, the precipitation type is not selected by the PType selector/receiver but instead is received from a source outside the nowcaster. In other words, the nowcaster 200 may request to a remote source (e.g., a third-party weather service) identification of the precipitation type that is most likely to occur for a given location at a given time and receive a response from the source identifying the most likely precipitation type. In this case, selection of the precipitation type is not performed by the nowcaster. The nowcaster merely is inputted with the already-selected precipitation type and thereby can save computational power of the nowcaster that would otherwise have been needed to perform the selection.

The selected precipitation type and the PRate values respectively output by the PType selector/receiver and the PRate distribution forecaster are combined. In one non-limiting example, if the selected precipitation type is snow, and the PRate values are as described above, the combined information would indicate:
a. No Snow: 30%
b. Light Snow: 40%
c. Moderate Snow: 20%
d. Heavy Snow: 10%.

As only one precipitation type is concerned, only minimal amount of computational power is needed to perform the combining to output the final weather forecast data. Since the PType selector/receiver will output one (1) precipitation type for a given location and time, if the PRate distribution forecaster outputs a number m of probability distribution, the final weather forecast data will comprise only a number m (m*1) of weather forecast distribution.

In outputting the final weather forecast data, it is possible to associate probability ranges with textual information for displaying the textual information to the user instead of the probabilities in numbers, similar to the embodiment shown in Figure 1. For example, probabilities that are between 5% and 15% may be associated with the text: "low chance," while probabilities that are between 40% and 70% may be associated with the text "high chance," or "very likely," etc. whereby, instead of displaying: "60% chance of heavy snow," it is possible to display: "high chance of heavy snow."

Accordingly, the nowcaster receives the location for which the nowcasts are needed and the time and/or time interval for which the nowcasts are needed and outputs the selected PType and PRate distribution for the given location and for the specific time.

The nowcaster according to this another embodiment may be advantageous over the embodiment shown in Figure 1 in certain circumstances in which efficiency is desired. This another embodiment can be implemented using much less processing power than the embodiment of Figure 1. However, the embodiment of Figure 1 may be more suitable than this alternative embodiment in providing more detailed and accurate snapshot of weather forecast data for any given location and time.

### HARDWARE AND OPERATING ENVIRONMENT

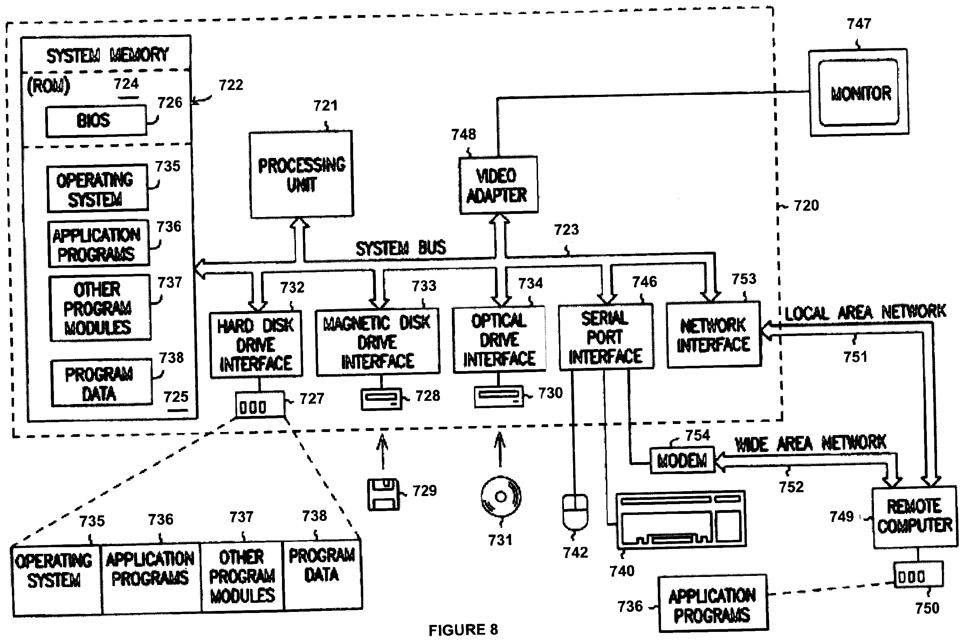

Figure 8 illustrates an exemplary diagram of a suitable computing operating environment in which embodiments of the invention may be practiced. The following description is associated with Figure 8 and is intended to provide a brief, general description of suitable computer hardware and a suitable computing environment in conjunction with which the embodiments may be implemented. Not all the components are required to practice the embodiments, and variations in the arrangement and type of the components may be made without departing from the spirit or scope of the embodiments.

Although not required, the embodiments are described in the general context of computer-executable instructions, such as program modules, being executed by a computer, such as a personal computer, a hand-held or palm-size computer, Smartphone, or an embedded system such as a computer in a consumer device or specialized industrial controller. Generally, program modules include routines, programs, objects, components, data structures, etc., that perform particular tasks or implement particular abstract data types.

Moreover, those skilled in the art will appreciate that the embodiments may be practiced with other computer system configurations, including hand-held devices, multiprocessor systems, microprocessor-based or programmable consumer electronics, network PCS, minicomputers, mainframe computers, cellular telephones, smart phones, display pagers, radio frequency (RF) devices, infrared (IR) devices, Personal Digital Assistants (PDAs), laptop computers, wearable computers, tablet computers, a device of the IPOD or IPAD family of devices manufactured by Apple Computer, integrated devices combining one or more of the preceding devices, or any other computing device capable of performing the methods and systems described herein. The embodiments may also be practiced in distributed computing environments where tasks are performed by remote processing devices that are linked through a communications network. In a distributed computing environment, program modules may be located in both local and remote memory storage devices.

The exemplary hardware and operating environment of Figure 8 includes a general purpose computing device in the form of a computer **720,** including a processing unit **721,** a system memory **722,** and a system bus **723** that operatively couples various system components including the system memory to the processing unit **721.** There may be only one or there may be more than one processing unit **721,** such that the processor of computer **720** comprises a single central-processing unit (CPU), or a plurality of processing units, commonly referred to as a parallel processing environment. The computer **720** may be a conventional computer, a distributed computer, or any other type of computer; the embodiments are not so limited.

The system bus **723** may be any of several types of bus structures including a memory bus or memory controller, a peripheral bus, and a local bus using any of a variety of bus architectures. The system memory may also be referred to as simply the memory, and includes read only memory (ROM) **724** and random access memory (RAM) **725.** A basic input/output system (BIOS) 726, containing the basic routines that help to transfer information between elements within the computer **720,** such as during start-up, is stored in ROM **724.** In one embodiment of the invention, the computer **720** further includes a hard disk drive **727** for reading from and writing to a hard disk, not shown, a magnetic disk drive **728** for reading from or writing to a removable magnetic disk **729,** and an optical disk drive **730** for reading from or writing to a removable optical disk **731** such as a CD ROM or other optical media. In alternative embodiments of the invention, the functionality provided by the hard disk drive **727,** magnetic disk **729** and optical disk drive **730** is emulated using volatile or non-volatile RAM in order to conserve power and reduce the size of the system. In these alternative embodiments, the RAM may be fixed in the computer system, or it may be a removable RAM device, such as a Compact Flash memory card.

In an embodiment of the invention, the hard disk drive **727,** magnetic disk drive **728,** and optical disk drive **730** are connected to the system bus **723** by a hard disk drive interface **732,** a magnetic disk drive interface **733,** and an optical disk drive interface **734,** respectively. The drives and their associated computer-readable media provide nonvolatile storage of computer-readable instructions, data structures, program modules and other data for the computer **720.** It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), and the like, may be used in the exemplary operating environment.

A number of program modules may be stored on the hard disk, magnetic disk **729,** optical disk **731,** ROM **724,** or RAM **725,** including an operating system **735,** one or more application programs **736,** other program modules **737,** and program data **738.** A user may enter commands and information into the personal computer **720** through input devices such as a keyboard **740** and pointing device **742.** Other input devices (not shown) may include a microphone, joystick, game pad, satellite dish, scanner, touch sensitive pad, or the like. These and other input devices are often connected to the processing unit **721** through a serial port interface 746 that is coupled to the system bus, but may be connected by other interfaces, such as a parallel port, game port, or a universal serial bus (USB). In addition, input to the system may be provided by a microphone to receive audio input.

A monitor **747** or other type of display device is also connected to the system bus **723** via an interface, such as a video adapter **748.** In one embodiment of the invention, the monitor comprises a Liquid Crystal Display (LCD). In addition to the monitor, computers typically include other peripheral output devices (not shown), such as speakers and printers. The monitor may include a touch sensitive surface which allows the user to interface with the computer by pressing on or touching the surface.

The computer **720** may operate in a networked environment using logical connections to one or more remote computers, such as a remote computer **749.** These logical connections are achieved by a communication device coupled to or a part of the computer **720;** the embodiment is not limited to a particular type of communications device. The remote computer **749** may be another computer, a server, a router, a network PC, a client, a peer device or other common network node, and typically includes many or all of the elements described above relative to the computer **720,** although only a memory storage device **750** has been illustrated in Figure 6. The logical connections depicted in Figure 6 include a local-area network (LAN) **751** and a wide-area network (WAN) **752.** Such networking environments are commonplace in offices, enterprise-wide computer networks, intranets and the Internet.

When used in a LAN-networking environment, the computer **720** is connected to the local network **751** through a network interface or adapter **753,** which is one type of communications device. When used in a WAN-networking environment, the computer **720** typically includes a modem **754,** a type of communications device, or any other type of communications device for establishing communications over the wide area network **752,** such as the Internet. The modem **754,** which may be internal or external, is connected to the system bus **723** via the serial port interface **746.** In a networked environment, program modules depicted relative to the personal computer **720,** or portions thereof, may be stored in the remote memory storage device. It is appreciated that the network connections shown are exemplary and other means of and communications devices for establishing a communications link between the computers may be used.

The hardware and operating environment in conjunction with which embodiments of the invention may be practiced has been described. The computer in conjunction with which embodiments of the invention may be practiced may be a conventional computer a hand-held or palm-size computer, a computer in an embedded system, a distributed computer, or any other type of computer; the invention is not so limited. Such a computer typically includes one or more processing units as its processor, and a computer-readable medium such as a memory. The computer may also include a communications device such as a network adapter or a modem, so that it is able to communicatively couple other computers.

While preferred embodiments have been described above and illustrated in the accompanying drawings, it will be evident to those skilled in the art that modifications may be made without departing from this disclosure. Such modifications are considered as possible variants comprised in the scope of the disclosure.

## Claims

1. A computer implemented method for generating a weather forecast for a given time period and a given territory, the method comprising:
receiving weather values for the given territory from one or more weather sources (201);
using the weather values, generating a plurality of precipitation type probabilities (PType), wherein each of the plurality of precipitation type probabilities indicates a likelihood that a corresponding precipitation type of a plurality of precipitation types will occur in the given territory during the given time period;
**characterized by** using the weather values, generating a plurality of precipitation rate probabilities (PRate), wherein each of the plurality of precipitation rate probabilities indicates a likelihood that a corresponding precipitation rate of a plurality of precipitation rates will occur in the given territory during the given time period;
combining the plurality of precipitation type probabilities (PType) and the plurality of precipitation rate probabilities (PRate) to produce a plurality of result probabilities (PTypeRate), wherein the plurality of result probabilities indicates likelihoods that each precipitation type of the plurality of precipitation types will occur at each precipitation rate of the plurality of precipitation rates in the given territory during the given time period; and
outputting a forecast representing the plurality of result probabilities (PTypeRate) for display.

2. The method of claim 1, wherein combining the plurality of precipitation type probabilities (PType) with the plurality of precipitation rate probabilities (PRate) comprises multiplying each of the plurality of precipitation type probabilities with each of the plurality of precipitation rate probabilities to obtain the result probabilities (PTypeRate).

3. The method of claim 1 or 2, further comprising receiving the weather values from a plurality of different weather sources (201).

4. The method of claim 3, further comprising generating the plurality of precipitation type probabilities from the weather values received from each weather source using a probability aggregator (212).

5. The method of claim 4, further comprising generating the plurality of precipitation rate probabilities based on an aggregation of the weather values received from each weather source.

6. The method of claim 5 further comprising generating the aggregation by performing weighted averaging on the weather values, wherein the weighted averaging is based on weather sources associated with the weather values.

7. The method of any one of claims 1-6, further comprising determining a probability that precipitation will not occur by summing the probabilities that no precipitation will occur in the given territory during the given time period.

8. The method of any one of claims 1-7, further comprising determining a probability that precipitation will occur by summing the probabilities that precipitation will occur in the given territory during the given time period.

9. The method of any one of claims 1-8, further comprising:
associating a textual description to a particular result probability of the plurality of result probabilities, wherein the forecast comprises the textual description.

10. The method of claim 9, further comprising:
generating a combination of two or more of the plurality of result probabilities along a dimension, the dimension being one of probability, rate of precipitation, and type of precipitation; and
associating a textual description to the combination.

11. The method of any one of claims 1-10, further comprising receiving a user input indicating a location of the given territory.

12. The method of any one of claims 1-11, further comprising receiving a user input indicating the given time period.

13. The method of any one of claims 1-12, wherein the weather values include at least a temperature profile for the given territory and wherein the plurality of precipitation type probabilities is generated based on at least the temperature profile.

14. A device for generating a weather forecast for a given time period and a given territory, the device comprising:
one or more processors; and
a memory storing instructions that, when executed by the one or more processors, cause the one or more processors to:
receive weather values for the given territory from one or more weather sources (201);
generate, using the weather values, a plurality of precipitation type probabilities (PType), wherein each of the plurality of precipitation type probabilities indicates a likelihood that a corresponding precipitation type of a plurality of precipitation types will occur in the given territory during the given time period;
**characterized in that** said instructions further cause the one or more processors to:
generate, using the weather values, a plurality of precipitation rate probabilities (PRate), wherein each of the plurality of precipitation rate probabilities indicates a likelihood that a corresponding precipitation rate of a plurality of precipitation rates will occur in the given territory during the given time period;
combine the plurality of precipitation type probabilities (PType) and the plurality of precipitation rate probabilities (PRate) to produce a plurality of result probabilities (PTypeRate), wherein the plurality of result probabilities indicates likelihoods that each precipitation type of the plurality of precipitation types will occur at each precipitation rate of the plurality of precipitation rates in the given territory during the given time period; and
output a forecast representing the plurality of result probabilities (PTypeRate) for display.

15. A non-transitory computer-readable medium comprising instructions that, when executed by a processor, cause it to carry out the method of any of claims 1-13.

## Patentansprüche

1. Computerimplementiertes Verfahren zur Erstellung einer Wettervorhersage für einen gegebenen Zeitraum und ein gegebenes Gebiet, das Verfahren umfassend:
Empfang von Wetterdaten für das gegebene Gebiet aus einer oder mehreren Wetterquellen (201),
Erstellung mehrerer Niederschlagsart-Wahrscheinlichkeiten (PType) unter Verwendung der Wetterdaten, wobei jede der mehreren Niederschlagsart-Wahrscheinlichkeiten eine Wahrscheinlichkeit angibt, dass eine entsprechende Niederschlagsart unter mehreren Niederschlagsarten im gegebenen Gebiet im gegebenen Zeitraum auftreten wird,
**gekennzeichnet durch** die Erstellung mehrerer Niederschlagsraten-Wahrscheinlichkeiten (PRate) unter Verwendung der Wetterdaten, wobei jede der mehreren Niederschlagsraten-Wahrscheinlichkeiten eine Wahrscheinlichkeit angibt, dass eine entsprechende Niederschlagsrate unter mehreren Niederschlagsraten im gegebenen Gebiet im gegebenen Zeitraum auftreten wird,
Kombination der mehreren Niederschlagsart-Wahrscheinlichkeiten (PType) mit den mehreren Niederschlagsraten-Wahrscheinlichkeiten (PRate) zur Erstellung mehrerer Ergebnis-Wahrscheinlichkeiten (PTypeRate), wobei die mehreren Ergebnis-Wahrscheinlichkeiten Wahrscheinlichkeiten angeben, dass jede Niederschlagsart unter den mehreren Niederschlagsarten im gegebenen Gebiet im gegebenen Zeitraum mit jeder Niederschlagsrate unter den mehreren Niederschlagsraten auftreten wird, und
Ausgabe einer Vorhersage der mehreren Ergebnis-Wahrscheinlichkeiten (PTypeRate) zur Anzeige.

2. Verfahren nach Patentanspruch 1, in dem Kombination der mehreren Niederschlagsart-Wahrscheinlichkeiten (PType) mit den mehreren Niederschlagsraten-Wahrscheinlichkeiten (PRate) die Multiplikation jeder der mehreren Niederschlagsart-Wahrscheinlichkeiten mit jeder der mehreren Niederschlagsraten-Wahrscheinlichkeiten umfasst, um die Ergebnis-Wahrscheinlichkeiten (PTypeRate) zu erhalten.

3. Verfahren nach Patentanspruch 1 oder 2, außerdem den Empfang der Wetterdaten aus mehreren verschiedenen Wetterquellen (201) umfassend.

4. Verfahren nach Patentanspruch 3, außerdem umfassend die Erstellung mehrerer Niederschlagsart-Wahrscheinlichkeiten aus den von jeder Wetterquelle empfangenen Wetterdaten unter Verwendung eines Wahrscheinlichkeitsaggregators (212).

5. Verfahren nach Patentanspruch 4, außerdem die Erstellung der mehreren Niederschlagsraten-Wahrscheinlichkeiten aufgrund einer Aggregation der von jeder Wetterquelle empfangenen Wetterdaten umfassend.

6. Verfahren nach Patentanspruch 5, außerdem die Ausführung der Aggregation durch gewichtete Mittelung der Wetterdaten umfassend, wobei die gewichtete Mittelung auf der Basis von Wetterquellen erfolgt, die mit den Wetterdaten verknüpft sind.

7. Verfahren nach einem der Patentansprüche 1 bis 6, außerdem die Bestimmung einer Wahrscheinlichkeit umfassend, dass Niederschlag nicht auftreten wird, durch Aufsummierung der Wahrscheinlichkeiten, dass kein Niederschlag im gegebenen Gebiet im gegebenen Zeitraum auftreten wird.

8. Verfahren nach irgendeinem der Patentansprüche 1 bis 7, außerdem die Bestimmung einer Wahrscheinlichkeit umfassend, dass Niederschlag auftreten wird, durch Aufsummierung der Wahrscheinlichkeiten, dass Niederschlag im gegebenen Gebiet im gegebenen Zeitraum auftreten wird.

9. Verfahren nach einem der Patentansprüche 1 bis 8, außerdem umfassend:
Zuordnen eines Beschreibungstextes zu einer bestimmten Ergebniswahrscheinlichkeit unter den mehreren Ergebniswahrscheinlichkeiten, wobei die Vorhersage den Beschreibungstext umfasst.

10. Verfahren nach Patentanspruch 9, außerdem umfassend:
Erzeugung einer Kombination aus zwei oder mehreren der mehreren Ergebniswahrscheinlichkeiten nach einer Dimension, wobei die Dimension entweder Wahrscheinlichkeit oder Niederschlagsrate oder Niederschlagart ist, und
Zuordnen eines Beschreibungstextes zu der Kombination.

11. Verfahren nach einem der Patentansprüche 1 bis 10, außerdem Empfang einer Benutzereingabe zur Angabe eines Ortes des gegebenen Gebietes umfassend.

12. Verfahren nach einem der Patentansprüche 1 bis 11, außerdem Empfang einer Benutzereingabe zur Angabe des gegebenen Zeitraumes umfassend.

13. Verfahren nach einem der Patentansprüche 1 bis 12, in dem die Wetterdaten mindestens ein Temperaturprofil des gegebenen Gebietes umfassen, und wobei die mehreren Niederschlagsart-Wahrscheinlichkeiten zumindest auf der Grundlage des Temperaturprofils erzeugt werden.

14. Vorrichtung zur Erstellung einer Wettervorhersage für einen gegebenen Zeitraum und ein gegebenes Gebiet, die Vorrichtung, umfassend:
einen oder mehrere Prozessoren, und
einen Speicher, der Anweisungen speichert, die bei Ausführung durch den einen oder die mehreren Prozessoren, den einen oder die mehreren Prozessoren veranlasst:
zum Empfang von Wetterdaten für das gegebene Gebiet aus einer oder mehreren Wetterquellen (201),
zur Erstellung mehrerer Niederschlagsart-Wahrscheinlichkeiten (PType) unter Verwendung der Wetterdaten, wobei jede der mehreren Niederschlagsart-Wahrscheinlichkeiten eine Wahrscheinlichkeit angibt, dass im gegebenen Gebiet im gegebenen Zeitraum eine entsprechende Niederschlagsart unter mehreren Niederschlagsarten auftreten wird,
**gekennzeichnet dadurch, dass** die genannten Anweisungen außerdem den einen oder die mehreren Prozessoren veranlassen: zur Erstellung mehrerer Niederschlagsraten-Wahrscheinlichkeiten (PRate) unter Verwendung der Wetterdaten, wobei jede der mehreren Niederschlagsraten-Wahrscheinlichkeiten eine Wahrscheinlichkeit angibt, dass im gegebenen Gebiet im gegebenen Zeitraum eine entsprechende Niederschlagsrate unter mehreren Niederschlagsraten auftreten wird,
zur Kombination der mehreren Niederschlagsart-Wahrscheinlichkeiten (PType) mit den mehreren Niederschlagsraten-Wahrscheinlichkeiten (PRate) zur Erstellung mehrerer Ergebnis-Wahrscheinlichkeiten (PTypeRate), wobei die mehreren Ergebnis-Wahrscheinlichkeiten Wahrscheinlichkeiten angeben, dass jede Niederschlagsart unter den mehreren Niederschlagsarten im gegebenen Gebiet im gegebenen Zeitraum mit jeder Niederschlagsrate unter den mehreren Niederschlagsraten auftreten wird, und
zur Ausgabe einer Vorhersage der mehreren Ergebnis-Wahrscheinlichkeiten (PTypeRate) zur Anzeige.

15. Ein nichtflüchtiges, computerlesbares Medium, Anweisungen enthaltend, die bei Ausführung durch einen Prozessor diesen dazu veranlassen, das Verfahren nach irgendeinem der Patentansprüche 1 bis 13 auszuführen.

## Revendications

1. Procédé appliqué par ordinateur pour générer la prévision météorologique pour une période de temps donnée et un territoire donné, le procédé consistant à :
recevoir les valeurs météorologiques pour un territoire donné à partir d'une ou plusieurs sources d'informations météorologiques (201),
utiliser les valeurs météorologiques, générer un ensemble de probabilités de type de précipitation (Type P) dans lequel chaque type de probabilités de précipitation indique une vraisemblance qu'une précipitation avec un type de précipitation correspondant d'un ensemble de types de précipitation se produira sur un territoire donné au cours de la période de temps donnée,
**caractérisé en ce qu'**
avec les valeurs météorologiques, on génère un ensemble de taux de probabilité de précipitation (Taux P), chacun des ensembles de taux de probabilité de précipitation indiquant la vraisemblance qu'un taux de précipitation correspondant parmi l'ensemble des taux de précipitation se produira dans le territoire donné au cours de la période de temps donnée,
- combiner l'ensemble des probabilités de type précipitation (Type P) et l'ensemble des taux de probabilités de précipitation (Taux P) pour produire un ensemble de probabilités résultantes (Taux de type P), l'ensemble des probabilités résultantes indiquant la vraisemblance que chaque type de précipitation parmi l'ensemble des types de précipitation se produira pour chaque taux de précipitation de l'ensemble des taux de précipitation sur un territoire donné au cours d'une période de temps donnée, et
- fournir en sortie une prévision représentant l'ensemble des probabilités résultantes (Taux de type P), pour l'affichage.

2. Procédé selon la revendication 1,
selon lequel,
on combine l'ensemble des probabilité de type de précipitation (Type P) avec l'ensemble des taux de probabilité de précipitation (Taux P) consistant à multiplier chacun des ensembles de probabilités de précipitation avec chacun des ensembles de taux de probabilité de précipitation pour obtenir les probabilités résultantes (Taux de type P).

3. Procédé selon la revendication 1 ou 2,
consistant en outre à recevoir les valeurs météorologiques d'un ensemble de sources météorologiques différentes (201).

4. Procédé selon la revendication 3,
comprenant en outre la génération de l'ensemble des probabilités de type précipitation à partir des valeurs météorologiques reçues de chaque source météorologique en utilisant un agrégateur de probabilités (212).

5. Procédé selon la revendication 4,
comprenant en outre la génération de l'ensemble des taux de probabilité de précipitation fondés sur la l'agrégation des valeurs météorologies reçues de chaque source météorologique.

6. Procédé selon la revendication 5,
comprenant en outre la génération de l'agrégation en effectuant des moyennes pondérées des valeurs météorologiques, les valeurs moyennes pondérées s'appuyant sur des sources météorologiques associées aux valeurs météorologiques.

7. Procédé selon l'une quelconque des revendications 1 à 6,
comprenant en outre la détermination d'une probabilité que la précipitation ne se produira pas, par l'addition des probabilités qu'il n'y aura pas de précipitation sur le territoire donné au cours de la période de temps donnée.

8. Procédé selon l'une quelconque des revendications 1 à 7,
comprenant en outre la détermination d'une probabilité que la précipitation se produira par l'addition des probabilités que les précipitations vont se produire sur le territoire donné pendant le période de temps donnée.

9. Procédé selon l'une quelconque des revendications 1 à 8,
comprenant en outre l'association d'une description textuelle d'une probabilité résultante particulière parmi l'ensemble des probabilités résultantes, la prévision comprenant la description textuelle.

10. Procédé selon la revendication 9,
comprenant en outre la génération de la combinaison de deux ou plus d'ensembles de probabilités résultantes selon une dimension, cette dimension étant une probabilité, un taux de précipitation et un type de précipitation, et
on associe la description textuelle à la combinaison.

11. Procédé selon l'une quelconque des revendications 1 à 10,
comprenant en outre la réception d'une entrée d'utilisateur indiquant un endroit du territoire donné

12. Procédé selon l'une quelconque des revendications 1 à 11,
comprenant en outre la réception d'une entrée d'utilisateur indiquant la période de temps donnée.

13. Procédé selon l'une quelconque des revendications 1 à 12,
selon lequel la valeur météorologique comprend au moins un profil de température pour le territoire donné et l'ensemble de probabilités de type précipitation est généré en se fondant au moins sur le profil de température.

14. Dispositif pour générer une prévision météorologique pour une période de temps donnée et un territoire donné, comprenant :
- un ou plusieurs processeurs,
- une mémoire contenant les instructions qui, lorsqu'elles sont exécutées par l'un ou plusieurs processeurs, font que :
* ces processeurs reçoivent des valeurs météorologiques pour un territoire donné en provenance d'une ou plusieurs sources d'informations météorologiques (201),
* génère, en utilisant les valeurs météorologiques, un ensemble de probabilités de type précipitation (Type P) selon lequel, chacune de l'ensemble de probabilités de type précipitation indique une vraisemblance avec un type de précipitation correspondant parmi un ensemble de types de précipitation se produira sur le territoire donné au cours de la période donnée,
**caractérisé en ce que** les instructions font en outre qu'un ou plusieurs processeurs :
- génèrent, en utilisant les valeurs météorologies, un ensemble de taux de probabilités de précipitation (Taux P), chacune de l'ensemble des probabilités de taux de précipitation indique la vraisemblance qu'un taux de précipitation correspondant parmi un ensemble de taux précipitation se produira sur le territoire donné au cours de la période de temps donnée,
- combinent l'ensemble des probabilités de type précipitation (Type P) est l'ensemble des probabilités de taux de précipitation (Taux P) pour produire un ensemble de probabilités résultantes (Taux de type P), l'ensemble des probabilités résultantes indiquant la vraisemblance que chaque de type de précipitation parmi l'ensemble des types de précipitation se produira pour chaque taux de précipitation parmi l'ensemble des taux de précipitation d'un territoire donné au cours d'une période de temps donnée, et
- sortent une prévision représentant l'ensemble des probabilités résultantes (Taux de type P) pour l'affichage.

15. Support lisible par un ordinateur, non transitoire portant des instructions qui lorsqu'elles sont exécutées par un processeur, lui font exécuté le procédé selon l'une quelconque des revendications 1 à 13.
